# EUROPÄISCHE PATENTANMELDUNG

(11) **EP 1 239 377 A1**
(43) Veröffentlichungstag der Anmeldung: **11.09.2002**
(21) Anmeldenummer: 01810234.3
(22) Anmeldetag: 07.03.2001
(51) Int. Cl.: G06F 17/30

(54) **Datenorganisationssystem und Verfahren zur Gliederungsstrukturverwaltung und -synchronisation**

(71) Anmelder: ABB RESEARCH LTD., 8050 Zürich (CH)
(72) Erfinder: Preiss, Otto, 5079 Zeihen (CH); Werner, Thomas, 5404 Baden (CH)
(74) Vertreter: ABB Patent Attorneys

(57) **Zusammenfassung**

Die Erfindung ist gerichtet auf ein Datenorganisationssystem, aufweisend zumindest eine Datengliederungsstruktur zur Beschreibung einer Gliederung mit benutzerdefinierbaren Gliederungselementen, die in einer benutzerdefinierbaren Relation zueinander stehen; ein oder mehrere Anwendungsprogramme, welche über Zugriffsmittel auf die Datengliederungsstruktur zugreifen können, und eine programminterne Datenrepräsentationsstruktur mit Gliederungselementen, unter denen Ressourcen eingegliedert sind oder sein können, wobei die Datenrepräsentationsstruktur von seinem Anwendungsprogramm mit der Datengliederungsstruktur synchronisiert oder synchronisierbar ist.

## Beschreibung

### Technisches Gebiet

Die vorliegende Erfindung betrifft ein System und Verfahren zur Erstellung und Wartung einer programmübergreifenden Struktur zur Organisation von Ressourcen wie Dateien, Hyperlinks o.ä. in einem Datenverarbeitungssystem.

### Stand der Technik

Verschiedene Datenrepräsentationssysteme werden in der Datenverarbeitung verwendet, um "benutzerunfreundliche" Organisationssysteme, die technisch bedingt sind, in benutzerfreundlichere, weil besser lesbar oder für den menschlichen Anwender logisch erfassbar, umzusetzen. Ein solches, bekanntes System sind Dateisysteme von Festplatten. Hier werden benutzerdefinierbare Dateinamen abgebildet auf Strukturen auf einer Festplatte, die numerischen Adressen von Datensektoren auf der Festplatte entsprechen. Dem Anwender werden bei der Verwaltung lediglich die Datei- und Verzeichnisnamen in einer hierarchischen Struktur angezeigt, bei deren Auswahl die numerisch definierten Blöcke von der Festplatte geladen werden, um die jeweils ausgewählte Datei aufzurufen.

Viele Anwendungsprogramme erlauben auf einer höheren Ebene als einem Dateisystem das Erstellen einer programmintegrierten, häufig hierarchischen Struktur, um jeweils von dem Anwendungsprogramm bearbeitbare Ressourcen wie Dateien, Hyperlinks, Mailings, Datenbankeinträge etc. logisch strukturiert in einer vom jeweiligen Anwender gewünschten Gliederung abzulegen. Diese Strukturierung ermöglicht einen schnelleren und effizienteren Zugriff auf die Ressourcen. Dateisysteme sind häufig noch den technischen Bedingungen der Betriebssystems unterworfen und erlauben daher keine hinreichend flexible Gestaltung anhand der Benutzerwünsche. Für viele andere Ressourcen gibt es gar keine systemweiten Strukturierungsmöglichkeiten, so daß die Integration einer entsprechenden Struktur in das jeweils verwendete Anwendungsprogramm die einzige Möglichkeit darstellt, die entsprechenden Ressourcen zu verwalten. Bei der Erstellung einer entsprechenden Struktur gibt der Anwender beispielsweise Kategorien wie "Arbeit", "Projekt X", "Privatadressen" oder ähnliches vor und ordnet diesen Ressourcen zu, welche in die Kategorie fallen sollen. Das Anwendungsprogramm erstellt jeweils Verweise von den Kategorieelementen zu den Ressourcen. Beim Aufruf einer Kategorie durch den Anwender werden diesem die einer Kategorie zugeordneten Ressourcen angezeigt.

Beim Aufruf der jeweiligen Ressource wird diese, meist auf Betriebssystemebene, nochmals maschinenlesbar umgesetzt und die Daten werden nach Abruf dem Anwendungsprogramm zugeführt.

Diesen bekannten Methoden sind jedoch verschiedene Nachteile zu eigen. Dateisysteme sind immanent auf einen Typ von Ressourcen, nämlich Dateien, beschränkt. Strukturen in Anwendungsprogrammen erlauben nur die Verwaltung von Ressourcen eines Typs, die von den Anwendungsprogrammen verarbeitet werden können. In jedem Anwendungsprogramm, welches eine entsprechende Organisationsstruktur aufweist, müssen die gleichen Schritte durchgeführt werden, nämlich Struktur aufbauen und Struktur warten (modifizieren, sichern, etc.). Die Verwaltung von vielen, begrenzt einsetzbaren Strukturen ist mühsam und wenig effizient, insbesondere, wenn man bedenkt, daß die Anwender oftmals die gleiche logische Strukturierung in den verschiedenen Anwendungsprogrammen verwenden möchten.

Der Einsatz einer anwendungsprogrammübergreifenden, logischen Informationsstruktur ist daher sehr sinnvoll. Eine solche gibt es bislang nicht. Es ist daher Aufgabe der vorliegenden Erfindung, dem Anwender ein System zur Verfügung zu stellen, das eine konsistente Strukturierung aller Ressourcen gestattet.

Diese Aufgabe wird gelöst durch das Datenorganisationssystem gemäß dem unabhängigen Patentanspruch 1 sowie das Verfahren zur Gliederungsstrukturverwaltung gemäß dem unabhängigen Patentanspruch 15. Weitere vorteilhafte Ausgestaltungen, Aspekte und Details ergeben sich aus den abhängigen Patentansprüchen und der Beschreibung.

### Darstellung der Erfindung

Der Erfindung liegt das Prinzip zugrunde, eine einheitliche Datengliederungsstruktur für verschiedene Anwendungsprogramme zu schaffen, welche auf die Struktur zugreifen und diese verwenden können, um eine eigene, programminterne Struktur zur Ressourcenverwaltung aufzubauen. Auf diese Weise kann eine einheitliche Gliederungsstruktur für Ressourcen zwischen allen, die gemeinsame Datengliederungsstruktur nutzenden Programmen erzielt werden. Die Erfindung vereinfacht damit das einheitliche Zugreifen auf physikalisch vorhandene Ressourcen in einer Datenverarbeitungsanlage.

Die Erfindung ist daher gerichtet auf ein Datenorganisationssystem, aufweisend

zumindest eine Datengliederungsstruktur zur Beschreibung einer Gliederung mit benutzerdefinierbaren Gliederungselementen, die in einer benutzerdefinierbaren Relation zueinander stehen; ein oder mehrere Anwendungsprogramme, welche über Zugriffsmittel auf die Datengliederungsstruktur zugreifen können, und eine programminterne Datenrepräsentationsstruktur mit Gliederungselementen, unter die Ressourcen eingegliedert sind oder sein können, wo bei die Datenrepräsentationsstruktur von seinem Anwendungsprogramm mit der Datengliederungsstruktur synchronisiert oder synchronisierbar ist.

Die programmübergreifende bzw. programmunabhängige Datengliederungsstruktur gibt hierbei quasi eine Vorlage vor, welche Gliederungselemente, also z.B. Kategorien, enthält. Die Datengliederungsstruktur ist benutzerdefiniert. Gliederungselemente sind vom Benutzer gewählte Angaben, unter denen er in den einzelnen Anwendungsprogrammen Ressourcen ablegen, d.h. diese dadurch kategorisieren will.

Die Gliederungselemente stehen erfindungsgemäß in einer Relation zueinander. Diese Relation gibt die eigentliche Strukturierung der Gliederungselemente und damit in den einzelnen Anwendungsprogrammen auch die Strukturierung der eigentlichen Ressourcen vor.

Jedes der in das System eingegliederten Anwendungsprogramme weist darüber hinaus eine programminterne Datenrepräsentationsstruktur auf. Diese besteht ebenfalls aus Gliederungselementen, die zueinander in einer Relation stehen. Im Unterschied zu der programmübergreifenden Gliederungsstruktur werden in der Datenrepräsentationsstruktur jedoch den Gliederungselementen vom Anwender Ressourcen zugeordnet. Diese dient also der eigentlichen Ressourcenverwaltung innerhalb eines Programms. Diese Datenrepräsentationsstrukturen entsprechen also den bereits aus dem Stand der Technik bekannten Strukturen zur Verwaltung von Ressourcen, wie beispielsweise dem URL-Verzeichnis eines WWW-Browsers oder einem Adressregister eines Adressverwaltungsprogramms.

Die Anwendungsprogramme können erfindungsgemäß mittels Zugriffsmitteln auf die externe Datengliederungsstruktur zugreifen. Unter Zugriffsmitteln im Sinne der vorliegenden Erfindung werden alle Einrichtungen bzw. Maßnahmen verstanden, die der Vermittlung zwischen Anwendungsprogrammen und der Datengliederungsstruktur dienen, d.h. den Zugriff auf und die Modifikation der Datengliederungsstruktur aus den Anwendungsprogrammen heraus gestatten. Diese Zugriffsmittel können als Teil des Anwendungsprogramms und als externe Funktion ausgeführt sein.

Wichtig für die Erfindung ist die Synchronisierung zwischen der Datengliederungsstruktur und den Datenrepräsentationsstrukturen. Synchronisierung bedeutet, daß entweder automatisch oder auf Anforderung durch einen Benutzer die Gliederungselemente der Datengliederungsstruktur und der Gliederungselemente der Datenrepräsentationsstruktur und ihre Relation zueinander angeglichen werden. Nach einer Synchronisierung weisen also beide Strukturen hinsichtlich der Gliederungselemente und der Relation dieser Gliederungselemente den gleichen Aufbau auf.

Eine solche Synchronisierung kann automatisch, beispielsweise bei jedem Starten eines Anwendungsprogramms und bei seinem Beenden, aber auch manuell auf Anforderung des Anwenders erfolgen. Durch das automatische Synchronisieren kann erreicht werden, daß alle Anwendungsprogramme stets die gleiche Struktur in ihren Datenrepräsentationsstrukturen aufweisen, die zudem alle identisch mit der Datengliederungsstruktur sind. Durch eine manuelle Synchronisierung lässt sich erreichen, daß Änderungen, die ein Anwender an der Struktur eines Programms vornimmt, anderen Programmen mehr oder weniger unmittelbar zur Verfügung steht.

Auch ist es in einer bevorzugten Ausführungsform möglich, eine ereignisgesteuerte ("event" gesteuerte) Synchronisierung durchzuführen. Hierzu abonnieren sich die Anwendungsprogramme auf einen Eventhandler, der über Änderungen der Datengliederungsstruktur informiert wird und diese als Ereignisse an die abonnierten Anwendungsrogramme weiterleitet, welche daraufhin eine Synchronsierung durchführen können.

Der Eventhandler kann als Teil der Zugriffsmittel realisiert sein oder als eine eigenständige Einheit bzw. als normaler Betriebssystem-Service zur Verfügung stehen. Die Informationen über eine Änderung an der Datengliederungsstruktur kann er von den Zugriffsmitteln, welche die Änderungen vornehmen, erhalten, oder von dem ändernden Anwendungsprogramm, nachdem dieses eine Quittierung der Änderung von den Zugriffsmitteln erhalten hat.

Ein automatischer Abgleich lässt sich auch erreichen, indem in die Anwendungsprogramme eine Funktionalität eingebaut wird, welche eine automatische, zeitgesteuerte Synchronisierung bewirkt. Auf diese Weise lässt sich erreichen, daß auch bei aktuell laufenden Programmen mit einer Zeitverzögerung Änderungen, die ein Anwender bei der Struktur eines Programms gemacht hat, über den Weg der gemeinsamen Datengliederungsstruktur in die jeweiligen Datenrepräsentationsstrukturen übernommen werden, so daß trotz Änderungen danach dem Anwender in allen Programmen eine gleiche Ressourcenstruktur begegnet.

Desweiteren besteht die Möglichkeit, einen Mechanismus vorzusehen, mit dem der Anwender eine Synchronisierung der gemeinsamen Datengliederungsstruktur und der jeweiligen anwendungsprogrammspezifischen Datenrepräsentationsstruktur abschalten kann, wenn er beispielsweise in einem bestimmten Programm eine unabhängige, eigenständige Struktur benötigt, welche nicht seiner normalen, systemweiten Ressourcengliederung entspricht.

Der Progammanwender kann auch bei der Programminstallation und danach fortlaufend die Wahl haben, ob er die gemeinsame Datengliederungsstruktur oder die einem Anwendungsprogramm spezifische Struktur der jeweiligen Datenrepräsentationsstruktur verwenden möchte.

Weitere Variationen eines Austauschs von Gliederungsdaten zwischen einer Datenrepräsentationsstruktur und der gemeinsamen Gliederungsstruktur sind erfindungsgemäß vorstellbar, so beispielsweise die Möglichkeit, applikationsspezifische Strukturen in die Datengliederungsstruktur zu kopieren, so daß deren spezielle Aspekte einen Teil der Datengliederungsstruktur bilden.

Der Zugriff auf die Datengliederungsstruktur erfolgt erfindungsgemäß durch Zugriffsmittel. Diese sind definitionsgemäß alle Funktionalitäten, die einer Informationsbeschaffung und -übertragung zwischen Anwendungsprogrammen, resp. den Datenrepräsentationsstrukturen der Programme, und der gemeinsamen Datengliederungsstruktur dienen. Die Zugriffsmittel können in die Anwendungsprogramme integriert oder getrennt davon ausgeführt sein. In der Praxis werden häufig Kombinationen dieser Möglichkeiten vorkommen, wobei ein Teil der Funktionalität in die Anwendungsprogramme integriert ist, und ein anderer Teil sich in separaten Modulen oder Programmen befindet. Im folgenden sollen verschiedene Möglichkeiten der Realisierung des Zugriffs auf die Datengliederungsstruktur über die Zugriffsmittel dargestellt werden.

Die Erfindung kann beispielsweise dadurch gekennzeichnet sein, daß die Zugriffsmittel eine in jedes der Anwendungsprogramme eingebauten Funktionalität aufweisen. Hierbei kann es sich um eine "Stand alone" Lösung handeln, bei der die gesamte für den Zugriff auf die Datengliederungsstruktur notwendige Funktionalität in alle Programme eingebaut ist. Auf diese Weise werden keine weiteren Komponenten benötigt, die in das System eingebunden werden müssen. Allerdings hat diese Lösung den Nachteil, daß die gesamte Funktionalität in jedem der am System teilnehmenden Anwendungsprogramme vollständig dupliziert werden muß, was den Programmieraufwand erhöht.

Daher wird häufig nur ein Teil der Zugriffsmittel in den Anwendungsprogrammen implementiert sein, während ein weiterer Teil ausserhalb liegt.

So können die Zugriffsmittel beispielsweise eine Betriebssystemkomponente aufweisen, die auf die Datengliederungsstruktur zugreifen kann und eine Funktionsschnittstelle aufweist, wobei die in die Anwendungsprogramme eingebaute Funktionalität Funktionsaufrufe der Funktionsschnittstelle sind.

Unter einer Betriebssystemkomponente ist im Sinne der vorliegenden Erfindung jegliche Funktionsgruppierung zu verstehen, welche so an das Betriebssystem angekoppelt ist bzw. von diesem verwaltet wird, daß sie anderen, auf dem Betriebssystem laufenden oder über ein Netzwerk mit dem Betriebssystem kommunizierenden Programmen zur Verfügung steht. Die Betriebssystemkomponente weist zur Kommunikation mit anderen Programmen eine Funktionsschnittstelle auf, über welche die in der Betriebssystemkomponente realisierten Funktionen aufrufbar sind und über die Ergebnisse der Funktionen an aufrufende Programme zurückgesandt werden. Die Funktionsaufrufe sind Anfragen an die Betriebssystemkomponente, welche über die Funktionsschnittstelle in einem vorgegebenen Format und als bestimmte Anfragetypen an die Betriebssystemkomponente gesandt werden. Zur Übertragung werden üblicherweise die normalen, im Betriebssystem für Interprozeßkommunikation vorgesehenen Verfahren verwendet werden.

Für die Realisierung der Betriebssystemkomponente stehen verschiedene Möglichkeiten zur Verfügung. Diese beginnen bei Hardwarekomponenten, welche beispielsweise bei kleineren Datenverarbeitungsgeräten wie Funktelephonen oder spezielleren Geräten eine direkte Implementierung übernehmen können, und reichen bis zu Datenbanksystemen.

In einer bevorzugten Ausführungsform der vorliegenden Erfindung ist die Betriebssystemkomponente eine dynamische Linkbibliothek mit einem "application programming interface" (API), wobei dann die Funktionsaufrufe Aufrufe des "application programming interface" sind. Dem Fachmann sind Implementierung von Dynamischen Linkbibliotheken in verschiedenen Variationen und deren Verwendung bei verschiedenen Betriebssystemen geläufig. Sie sind ein Standardansatz, um Funktionen verschiedenen Programmen zur Verfügung stellen zu können. Nach Realisierung einer Dynamischen Linkbibliothek können die Aufrufe des API in den Quelltext von Programmen eingebaut werden und die Kompilierung so durchgeführt werden, daß das lauffähige Programm beim Programmlauf mit der Dynamischen Linkbibliothek interagieren kann. Die Auflösung der Funktionsaufrufe zum Ansprechen bestimmter Funktionen der Linkbibliothek kann hierbei entweder während der Kompilierung stattfinden (early binding) oder aber erst zur Laufzeit der jeweiligen Software (late binding). Welches der Verfahren gewählt wird, hängt von den zu erfüllenden Bedingungen und der verwendeten Programmiersprache ab.

Vom Begriff der Dynamischen Linkbibliothek sollen im Sinne der vorliegenden Erfindung auch andere Arten von Erweiterungen verstanden werden, welche erst zur Laufzeit eines Programms seine Funktionalität ergänzen, insbesondere auf solchen Betriebssystemen und/oder mit solchen Programmiersprachen, welche das Konzept der Dynamischen Linkbibliothek nicht aufweisen.

In einem alternativen Ansatz kann die Betriebssystemkomponente ein Programm sein und die Funktionsaufrufe können Programmaufrufe mit Parameterübergaben sein. In vielen Betriebssystemumgebungen stehen Funktionen zur Verfügung, mit denen ein Programm ein anderes aufrufen kann, um dessen Funktionen zu nutzen. Die Kommunikation zwischen den Programmen erfolgt dabei über Standardverfahren, beispielsweise "Pipes" oder "Streams", wie dem Fachmann geläufig ist. Bei Verwendung eines speziellen Programms, welches die Datengliederungsstruktur verwalten und abfragen kann, werden vom anfragenden Anwendungsprogramm Parameter mitübergeben, welche das Programm in Anweisungen zum Aufruf spezieller Funktionen umsetzt.

Das Programm kann hierbei ein Datenbanksystem sein, wobei die Datengliederungsstruktur von dem Datenbanksystem verwaltet wird. Die Datengliederungsstruktur liegt in diesem Fall als Datenbank, d.h. als Datei oder Dateigruppe in speziellem, vom Datenbanksystem verwendeten Format vor.

Im folgenden soll die Datengliederungsstruktur in der vorliegenden Erfindung erläutert werden. Wie bereits oben ausgeführt, umfasst die Datengliederungsstruktur zumindest Gliederungselemente und Relationen zwischen den Gliederungselementen.

Die Gliederungselemente sind vom Anwender definierte Begriffe, mit deren Hilfe er die von ihm verwendeten Ressourcen untergliedern will, um sie ihm logisch verständlich bestimmten Themenkomplexen zuzuordnen. Die Gliederungselemente sollen möglichst frei von technischen Beschränkungen die Vorstellungen des Anwenders wiedergeben können. Hierzu ist es sinnvoll, bei der Definition einen möglichst vollständigen Zeichensatz inkl. Sonderzeichen und Zahlen zur Verfügung zu stellen, mit denen der Anwender die Gliederungselemente benennen kann. Genauso ist es vorstellbar, Bildelemente zur Verfügung zu stellen oder dem Anwender die Möglichkeit zu geben, Bildelemente selbst zu entwerfen und/oder in die Datengliederungsstruktur einzubauen.

Der Anwender ist frei in der Wahl der Gliederungselemente. So kann er Gliederungselemente nach bestimmten Projekten benennen, nach Privat oder geschäftlich unterteilen, Monatszuordnungen vornehmen etc.

Außer der Bezeichnung von Gliederungselementen (durch Zeichenketten und/oder Bildelemente, s.o.) ist für die Festlegung der Datengliederungsstruktur durch den Anwender auch die Relation von Gliederungselemente zueinander umfaßt.
Die Relation der Gliederungselemente kann erfindungsgemäß ihre Abfolge und ihre hierarchische Anordnung umfassen. Die Abfolge bestimmt hierbei, wie sich die Gliederungselemente dem Benutzer präsentieren, wenn er sie betrachtet. Die Abfolge kann der Anwender ebenfalls frei festlegen. Es ist jedoch auch möglich, die Abfolge automatisch festzulegen, beispielsweise durch die Zugriffsmittel. Eine automatische Abfolge kann zum Beispiel alphabetisch erfolgen oder durch einfaches Anhängen neuer Gliederungselemente an die Datengliederungsstruktur.

Eine weitere, erfindungsgemäß bevorzugte Möglichkeit ist die Relation der Gliederungselemente in einer hierarchischen Anordnung. Oft ist es sinnvoll, Kategorien von Ressourcen weiter zu untergliedern. beispielsweise Projekte in Teilprojekte oder Informationskategorien in Unterinformationskategorien. Daher ist es erfindungsgemäß vorzugsweise vorgesehen, unter Gliederungselemente wiederum Gliederungselemente unterordnen zu können, die auf einer hierarchisch niedrigeren Ebene stehen. Bei der Darstellung der Datengliederungsstruktur bzw. der von dieser abgeleiteten Datenrepräsentationsstrukturen der Anwendungsprogramme kann dies beispielsweise Einfluß auf die Darstellung der Strukturen auf dem Bildschirm haben, in etwa, indem untergeordnete Gliederungselemente erst angezeigt werden, nachdem der Anwender das übergeordnete Gliederungselement, unter das jene eingeordnet sind, ausgewählt hat (z.B. mit dem Cursor oder einer Maus), oder indem untergeordnete Gliederungselemente unter dem übergeordneten Gliederungselement eingerückt werden.

Die Datengliederungsstruktur kann neben den Gliederungselementen und Informationen über deren Relation zueinander weitere Informationen enthalten. So kann eine Information über einen Eigentümer (Anwender) ebenso enthalten sein wie eine Versionsnummer, falls mehrere Versionen nebeneinander betrieben werden sollen, oder Informationen über konkrete Ressourcen, die beispielsweise in allen Anwendungsprogrammen zur Verfügung stehen sollen.

Auch ist es möglich, die Gliederungselemente oder/und die Datengliederungsstruktur mit Attributen zu versehen, welche weitere Informationen enthalten können. So können beispielsweise mit Hilfe von Attributen bestimmte Gliederungselemente (inklusive oder exklusive diesen untergeordneter Gliederungselemente) als nur lesbar, d.h. nicht modifizierbar, gekennzeichnet werden. Durch Zuordnen von Gliederungselementen zu bestimmten Anwendern können bei Datengliederungsstrukturen, die von gesamten Arbeitsgruppen verwendet werden, bestimmte Gliederungselemente als nur von den Eigentümern modifizierbar gekennzeichnet werden.

Attribute können auch Benutzerangaben sein, die ggfs. mit bestimmten zusätzlichen oder eingeschränkten Rechten für bestimmte Benutzer oder Benutzergruppen verbunden sein können.

Attribute können auch verwendet werden, um die Relation der Elemente zueinander zu bestimmen. Hierbei können beispielsweise Attributwerte die Reihenfolge der Gliederungselemente bei ihrer Darstellung in Anwendungsprogrammen festlegen. Auf diese Weise muß die Datengliederungsstruktur bei Änderungen nicht insgesamt umgestellt werden, sondern es ist ausreichend, die Attributwerte zu ändern.

Die Attribute können auch hierarchisch nach unten wirken, indem ein für ein übergeordnetes Gliederungselement geltendes Attribut automatisch auch auf diesem untergeordnete Gliederungselemente angewendet wird (Vererbung der Attributwerte, inheritance). Solche Attribute können auf unteren Ebenen überschrieben werden (overriding).

Wie oben erwähnt, kann die Datengliederungsstruktur in einer Datenbank vorliegen. Aus Gründen der einfacheren Implementierung und Wartbarkeit wird es allerdings häufig zu bevorzugen sein, daß die Datengliederungsstruktur eine Datei ist, die eine strukturierte Liste mit Einträgen enthält, welche die Gliederungselemente und ihre Relation zueinander darstellen, wobei die Darstellung der Relationen durch eine Anordnung der Gliederungselemente innerhalb der Datei erfolgt.

In einfachen Fällen kann einfach die Abfolge der Gliederungselemente durch die Abfolge der Gliederungselemente in dieser Datei festgelegt werden, während die hierarchische Anordnung durch Einrücken von untergeordneten Gliederungselementen unter das übergeordnete erfolgen kann. In anderen Ausführungsformen können die Gliederungselemente mit Indexbezeichnungen (Attribute) versehen sein, wobei die Relation durch eine Liste mit Indexbezeichnungen erfolgen kann, die jeweils durch ihre Verweise aufeinander die Relation der Gliederungselemente bestimmten können.

Insbesondere wird es bevorzugt, daß die zur Realisierung der Datengliederungsstruktur verwendete Datei eine XML-Datei ist. XML (eXtended Markup Language) ist eine Seitenbeschreibungssprache zur Informationsdarstellung bzw. -speicherung, bei der die einzelnen Informationen sogenannten "Tags" (Bezeichnern) zugewiesen sind, welche eine Strukturierung erlauben. XML ermöglicht durch die gezielte Verwendung von Tags insbesondere die Kategorisierung von Informationen und den gezielten Zugriff auf diese Informationen anhand der Tags.

Die verschiedenen, in das erfindungsgemäße Datenorganisationssystem eingebundenen Anwendungsprogramme führen eigene Datenrepräsentationsstrukturen zur Verwaltung der eigentlichen, von dem jeweiligen Programm nutzbaren Ressourcen. Diese unterschieden sich daher in ihrem Aufbau gegenüber der erfindungsgemäßen Datengliederungsstruktur darin, diese zusätzlichen Ressourceninformationen zu enthalten. Die von den Anwendungsprogrammen verwendbaren Ressourcen können sich von Programm zu Programm erheblich unterscheiden. Es wird bevorzugt, daß die Ressourcen in der Datenrepräsentationsstruktur Objekte in Dateisystemen, Objekte in Dateien, Datensätze in Datenbanken und Objekte in Computernetzwerken sein können, ohne das diese Auflistung vollständig sein müsste. Hierdurch wird ein möglichst breites Spektrum an verschiedenen Ressourcen abgedeckt. Objekte in Dateisystemen können beispielsweise Dateien oder Verzeichnisse sein, die auf Festplatten oder in Netzwerkdateisystemen vorhanden sind, Objekte in Dateien können beispielsweise Einträge eines Adressbuchs sein, Datensätze in Datenbanken können Kollektionen von miteinander verbundenen Informationen sein, die in einer bestimmten Datenbank gespeichert sind; und Objekte in Computernetzwerken können beispielsweise URLs (universal resource locator) im WorldWideWeb oder Einträge in anderen Internet-Diensten wie WAYS oder ftp sein.

Bislang ist im wesentlichen auf die Organisation der Gliederungselemente und Ressourcen und der Verbindung der verschiedenen Elemente der Erfindung eingegangen worden. Im folgenden soll erläutert werden, welche Anforderungen die Zugriffsmittel aufweisen können. Zunächst weisen die Zugriffsmittel bevorzugt eine Funktionalität auf, welche in das jeweilige Anwendungsprogramm integriert ist, und die Benutzereingaben umsetzt in Anweisungen zur Manipulation der erfindungsgemäßen Datengliederungsstruktur, beispielsweise zu Änderungen oder zur Synchronisierung. Diese Anweisungen können entweder programmintern verwendet werden, oder werden an weitere Zugriffsmittel weitergeleitet, welche den eigentlichen Zugriff auf die Datengliederungsstruktur durchführen.

### Um diese Aufgabe erfüllen zu können, weisen die Zugriffsmittel vorzugsweise auf:

Mittel zum Empfangen von Anweisungen von Anwendungsprogrammen, welche sich auf das Abfragen und/oder Manipulieren der Datengliederungsstruktur beziehen;

Mittel zum Auslesen und/oder Manipulieren der in der Datengliederungsstruktur enthaltenen Gliederungselemente und ihrer Relation anhand der empfangenen Anweisungen; und

Mittel zum Übersenden von ausgelesenen Daten der Datengliederungsstruktur an das abfragende Anwendungsprogramm.

Außer bei der Synchronisierung kann es mitunter wünschenswert sein, Änderungen an der gemeinsamen Datengliederungsstruktur vorzunehmen, um beispielsweise ein neues Organisationskonzept der eigenen Tätigkeit zu erstellen. Statt dieses in einer Datenrepräsentationsstruktur beispielhaft vorzunehmen, kann es gewünscht sein, direkt die gemeinsame Struktur zu ändern. Das erfindungsgemäße Datenorganisationssystem kann daher dadurch gekennzeichnet sein, daß zumindest eines der Anwendungsprogramme aufweist Funktionen zum Anlegen und Manipulieren der Gliederungselemente der Datengliederungsstruktur und deren Relationen zueinander.

Auf diese Weise können eventuelle Änderungen direkt und nicht über den Umweg der Datenrepräsentationsstruktur vorgenommen werden. Nicht alle Anwendungsprogramme müssen diese Eingriffsmöglichkeit aufweisen, vielmehr reicht bereits ein Programm. Alternativ ist es auch möglich, für diesen Zweck ein spezielles Programm bereitzustellen, das Funktionen zum Verwalten der Datengliederungsstruktur aufweist. Dieses Programm kann entweder über eigene Mechanismen oder über die normalen Zugriffsmittel auf die Datengliederungsstruktur zugreifen.

Das erfindungsgemäße Datenorganisationssystem kann vorzugsweise ein Computerprogrammprodukt sein, dessen Bestandteile zumindest teilweise direkt in den Hauptspeicher einer digitalen Datenverarbeitungsanlage geladen werden können und dessen Programmbestandteile von der Datenverarbeitungsanlage ausgeführt werden können.

Die Erfindung ist weiterhin auf ein Verfahren gerichtet. Dieses Verfahren bewirkt die erfindungsgemäße Synchronisierung zwischen einer Datenrepräsentationsstruktur und der gemeinsamen Datengliederungsstruktur. Alles bezüglich des Datenorganisationssystems gesagte gilt ebenfalls für das Verfahren, so daß darauf vollinhaltlich Bezug genommen wird.

Das erfindungsgemäße Verfahren zur Gliederungsstrukturverwaltung weist folgende Schritte auf:
- Auslesen einer Datengliederungsstruktur zur Beschreibung einer Gliederung mit benutzerdefinierbaren Gliederungselementen, die in einer benutzerdefinierbaren Relation zueinander stehen, durch ein Anwendungsprogramm;
- Auslesen einer programminternen Datenrepräsentationsstruktur mit Gliederungselementen, unter die Ressourcen eingegliedert sind oder sein könnnen;
- Feststellen von Unterschieden zwischen der Datengliederungsstruktur und der programminternen Datenrepräsentationsstruktur; und
- Synchronisieren von Datengliederungsstruktur und programminterner Datenrepräsentationsstruktur bezüglich ihrer jeweiligen Gliederungselemente und deren Relation zueinander.

Wie bereits oben erläutert, bewirkt die Synchronisierung eine Angleichung der Gliederungselemente und deren Relation zueinander, von Datengliederungsstruktur und Datenrepräsentationsstruktur.

Hierbei kann das Synchronisieren ein Angleichen der programminternen Datenrepräsentationsstruktur an die Datengliederungsstruktur sein, aber auch ein Angleichen der Datengliederungsstruktur an die programminterne Datenrepräsentationsstruktur. Die Art der Synchronisierung kann entweder fest vorgegeben sein, oder es kann eine Entscheidung darüber getroffen werden, welche Struktur angeglichen wird. Die Entscheidung darüber, welche Struktur bei der Synchronisierung an welche angeglichen wird, kann entweder benutzerdefiniert vorgenommen werden oder durch eine in das Programm oder die Zugriffsmittel eingebaute Funktionalität automatisch getroffen werden. Hierbei können Kriterien wie der Zeitpunkt der letzten Änderung (die alte Struktur wird an die jüngere angeglichen) oder die Zahl der Änderungen seit einem vorgegebenen Zeitpunkt (die Struktur mit den meisten Änderungen bleibt erhalten, die andere wird angeglichen) hinzugezogen werden. Auch eventuell vorhandene Attribute können hier ausgewertet werden, um beispielsweise das Ändern von Nur-Lese-Gliederungselementen zu verhindern. Der Begriff des Änderns kann sich hierbei sowohl auf die Bezeichnung eines Gliederungselements beziehen als auch auf die Relation des Elements zu anderen Elementen.

Das erfindungsgemäße Verfahren kann weiterhin dadurch gekennzeichnet sein, daß vor einem ersten Auslesen der Datengliederungsstruktur folgender Schritt durch eines der Anwendungsprogramme oder ein spezielles Anwendungsprogramm durchgeführt wird:
- Anlegen der benutzerdefinierbaren Datengliederungsstruktur.

Durch diesen vorbereitenden Schritt kann die Datengliederungsstruktur überhaupt erst erzeugt werden. Dies kann dadurch geschehen, daß eine existierende Datenrepräsentationsstruktur als Basis für die Erstellung der Datengliederungsstruktur verwendet wird, oder dadurch, daß der Anwender unmittelbar in einem Anwendungsprogramm die Möglichkeit erhält, die Datengliederungsstruktur anzulegen. Sinnvollerweise handelt es sich bei diesen Programmen um dieselben, die bereits bezüglich der Verwaltung der Datengliederungsstruktur oben beschrieben worden sind.

Im folgenden soll anhand eines Beispiels das Ausehen einer erfindungsgemäßen Datengliederungsstruktur näher erläutert werden. Das Beispiel basiert auf der Seitenbeschreibungssprache XML, einer bevorzugten Ausführungsform.

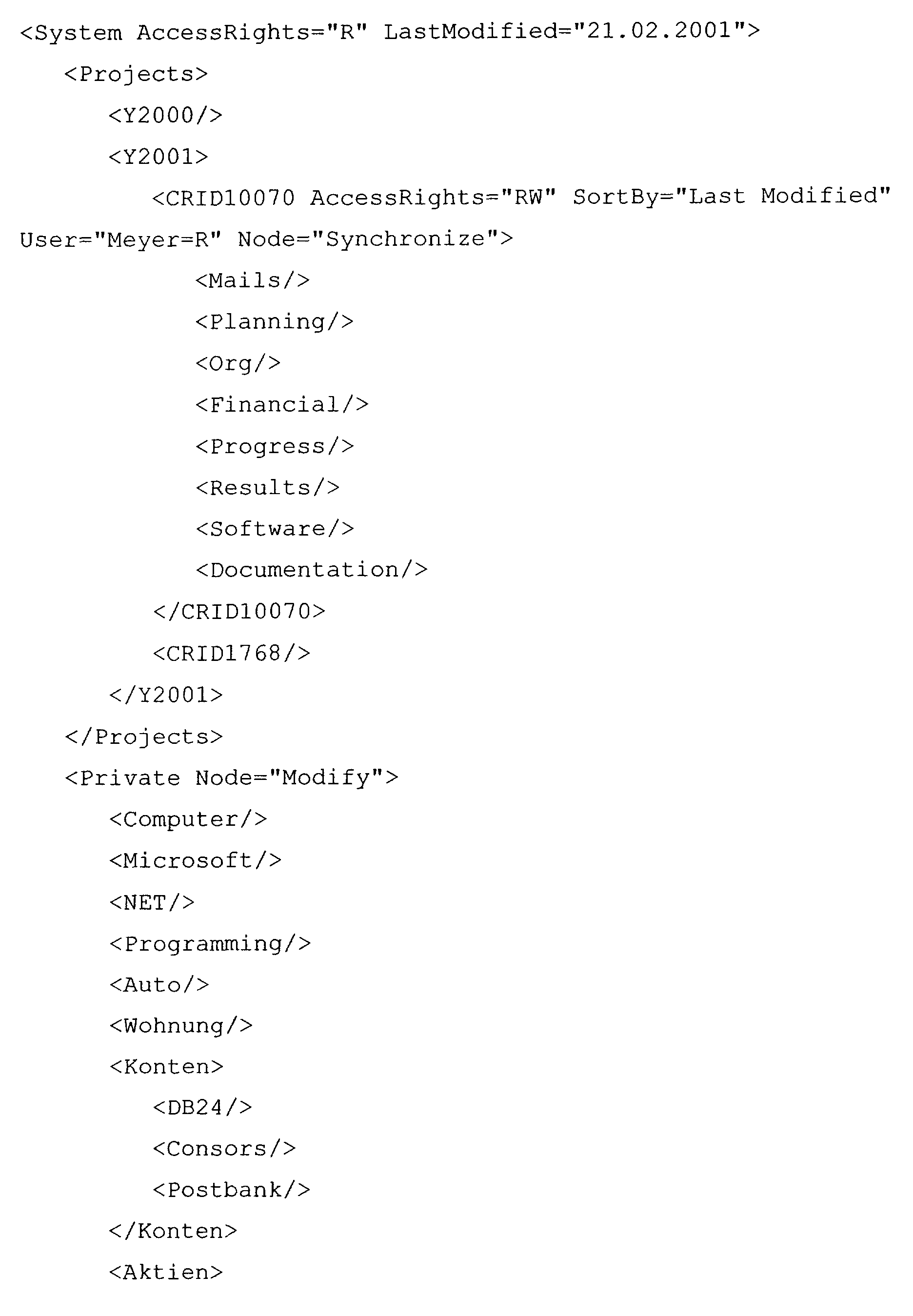

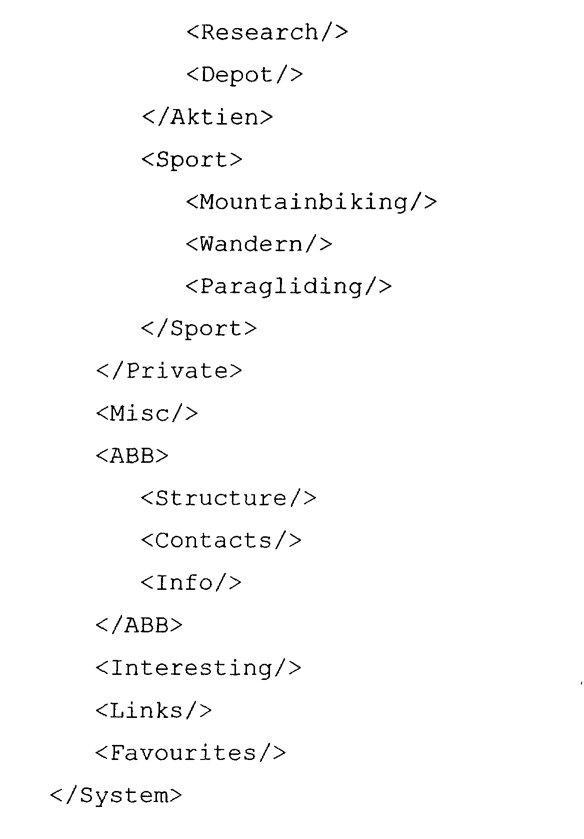

Wie ersichtlich, enthält das obige Beispiel eine Reihe von Gliederungselementen, die, XML-typisch, jeweils in spitze Klammern gesetzt sind. Die verschiedenen hierarchischen Ebenen sind logisch durch die verschiedenen Tag-Formen getrennt. Gliederungselemente, die wiederum untergeordnete Elemente enthalten, sind durch die beiden Tags "<gliederungselement>" und "</gliederungselement>" begrenzt, während Gliederungselemente der untersten Hierarchiestufe, die keine untergeordneten Gliederungselemente mehr aufweisen, aus einem einzelnen Eintrag der Form "<gliederungselement/>" bestehen. Die oberste Ebene der Gliederungsstruktur wird gerahmt durch <system>...</system>. Dieser Ebene sind im vorliegenden Beispiel hierarchisch die Einträge <Projects>, <Private>, <Misc/>, <ABB>, <Interesting/>, <Links/>, und <Favourites/> untergeordnet. Es handelt sich hierbei um ganz unterschiedliche Begriffe, die dennoch zu einer einheitlichen, die persönlichen Vorstellungen eines Anwenders wiederspiegelnden Datengliederungsstruktur vereint sind.

Das Beispiel erläutert ebenfalls die Verwendung von Attributen. Diese können hierarchisch durchgereichte Attribute sein, d.h., daß ein Attribut aus beispielsweise "System" Level auch auf allen unteren Knoten sichtbar ist. Attribute können überschrieben werden.
Mit dem Attribut "AcessRights" werden Schreib und Leseberechtigungen festgelegt; im vorliegenden Fall mit den drei Werten R (Lesen), W (Schreiben) und RW (Lesen und Schreiben). Die Angabe des Datums der letzten Modifikation ist ebenfalls möglich und wird vom Attribut "LastModified" angegeben, wobei das Datumsformat auch anders ausgeführt sein kann als im vorliegenden Beispiel. Dieses Attribut kann beispielsweise für Sortierzwecke verwendet werden.

Mit dem Attribut "SortBy" ist im konkreten Ausführungsbeispiel eine explizite Angabe einer Sortierreihenfolge für einen Knoten möglich (hier z.B. nach dem Attribut "LastModified").

Das Attribut "Node" mit den Werten "Modify" und "Synchronise" legt beispielhaft die Synchronisierung fest. Bei Wert "Synchronise" hat ein Programm die Masterrights auf diesen Knoten und es wird immer eine automatische Synchronisierung durchgeführt. Der Wert "Modify" legt fest, daß der Knoten verschiedene Zweige (Branches) in Anwendungsprogrammen haben darf.

Mit dem Attribut "User" können Rechte für bestimmte Anwender oder Anwendergruppen zusätzlich erteilt oder eingeschränkt werden.

Die Verwendung von XML im vorliegenden Beispiel hat den Vorteil, mit bekannten Prozessoren für XML eine Bearbeitung der Datengliederungsstrukturdatei vornehmen zu können, so daß bei der Anpassung der Anwendungsprogramme ebenfalls auf bekannte APIs zurückgegriffen werden kann.

Vorteile der erfindungsgemäßen Datengliederungsstruktur sind darin zu sehen, daß sie vom Anwender nur einmal erstellt werden muß und an einem zentralen Ort gespeichert und gewartet werden kann, wobei sich alle vorgenommenen Änderungen dann auf alle Applikationen auswirken, welche die Struktur verwenden. Wird die Datengliederungsstruktur so gestaltet, daß sie portabel ist, hat dies auch bei eventuellen Neuinstallationen des Betriebssystems den enormen Vorteil, daß die Struktur nicht mehr von Hand eingegeben werden muß, sondern einfach durch Kopieren übernommen wird.

## Patentansprüche

1. Datenorganisationssystem, aufweisend
- zumindest eine Datengliederungsstruktur zur Beschreibung einer Gliederung mit benutzerdefinierbaren Gliederungselementen, die in einer benutzerdefinierbaren Relation zueinander stehen;
- ein oder mehrere Anwendungsprogramme, welche über Zugriffsmittel auf die Datengliederungsstruktur zugreifen können, und welche eine programminterne Datenrepräsentationsstruktur mit Gliederungselementen aufweisen, unter welche Gliederungselemente Ressourcen eingegliedert sind oder sein können;
wobei die Datenrepräsentationsstruktur eines Anwendungsprogramms mit der Datengliederungsstruktur synchronisiert oder durch das Anwendungsprogramm mit der Datengliederungsstruktur synchronisierbar ist.

2. Datenorganisationssystem nach Anspruch 1, **dadurch gekennzeichnet, daß** die Zugriffsmittel eine in jedes der Anwendungsprogramme eingebauten Funktionalität aufweisen.

3. Datenorganisationssystem nach Anspruch 2, **dadurch gekennzeichnet, daß** die Zugriffsmittel eine Betriebssystemkomponente aufweisen, die auf die Datengliederungsstruktur zugreifen kann und eine Funktionsschnittstelle aufweist, und die in die Anwendungsprogramme eingebaute Funktionalität Funktionsaufrufe der Funktionsschnittstelle sind.

4. Datenorganisationssystem nach Anspruch 3, **dadurch gekennzeichnet, daß** die Betriebssystemkomponente eine dynamische Linkbibliothek mit einem "application programming interface" ist und die Funktionsaufrufe Aufrufe des "application programming interface" sind.

5. Datenorganisationssystem nach Anspruch 3, **dadurch gekennzeichnet, daß** die Betriebssystemkomponente ein Programm ist und die Funktionsaufrufe Programmaufrufe mit Parameterübergaben sind.

6. Datenorganisationssystem nach Anspruch 5, **dadurch gekennzeichnet, daß** das Programm ein Datenbanksystem ist und die Datengliederungsstruktur von dem Datenbanksystem verwaltet ist.

7. Datenorganisationssystem nach einem der Ansprüche 1 bis 6, **dadurch gekennzeichnet, daß** die Relation der Gliederungselemente ihre Abfolge und ihre hierarchische Anordnung umfasst.

8. Datenorganisationssystem nach einem der Ansprüche 1 bis 7, **dadurch gekennzeichnet, daß** die Datengliederungsstruktur eine Datei ist, die eine strukturierte Liste mit Einträgen enthält, welche die Gliederungselemente und ihre Relation zueinander darstellen, wobei die Darstellung der Relation durch eine Anordnung der Gliederungselemente innerhalb der Datei erfolgt.

9. Datenorganisationssystem nach Anspruch 8, **dadurch gekennzeichnet, daß** die Datei eine XML-Datei ist.

10. Datenorganisationssystem nach einem der Ansprüche 1 bis 9, **dadurch gekennzeichnet, daß** die Ressourcen in der Datenrepräsentationsstruktur Objekte in Dateisystemen, Objekte in Dateien, Datensätze in Datenbanken und Objekte in Computernetzwerken sein können.

11. Datenorganisationssystem nach einem der Ansprüche 1 bis 10, **dadurch gekennzeichnet, daß** die Zugriffsmittel aufweisen
- Mittel zum Empfangen von Anweisungen von Anwendungsprogrammen, welche sich auf das Abfragen und/oder Manipulieren der Datengliederungsstruktur beziehen;
- Mittel zum Auslesen und/oder Manipulieren der in der Datengliederungsstruktur enthaltenen Gliederungselemente und ihrer Relation anhand der empfangenen Anweisungen; und
- Mittel zum Übersenden von ausgelesenen Daten der Datengliederungsstruktur an das abfragende Anwendungsprogramm.

12. Datenorganisationssystem nach einem der Ansprüche 1 bis 11, **dadurch gekennzeichnet, daß** zumindest eines der Anwendungsprogramme aufweist Funktionen zum Anlegen und Manipulieren der Gliederungselemente der Datengliederungsstruktur und deren Relationen zueinander.

13. Datenorganisationssystem nach einem der Ansprüche 1 bis 12, **dadurch gekennzeichnet, daß** ein spezielles Programm aufweist Funktionen zum Verwalten der Datengliederungsstruktur.

14. Datenorganisationssystem nach einem der Ansprüche 1 bis 13, **dadurch gekennzeichnet, daß** es ein Computerprogrammprodukt ist, dessen Bestandteile zumindest teilweise direkt in den Hauptspeicher einer digitalen Datenverarbeitungsanlage geladen werden können und dessen Programmbestandteile von der Datenverarbeitungsanlage ausgeführt werden können.

15. Verfahren zur Gliederungsstrukturverwaltung mit folgenden Schritten:
- Auslesen einer Datengliederungsstruktur zur Beschreibung einer Gliederung mit benutzerdefinierbaren Gliederungselementen, die in einer benutzerdefinierbaren Relation zueinander stehen, durch ein Anwendungsprogramm;
- Auslesen einer programminternen Datenrepräsentationsstruktur mit Gliederungselementen, unter die Ressourcen eingegliedert sind oder sein könnnen;
- Feststellen von Unterschieden zwischen der Datengliederungsstruktur und der programminternen Datenrepräsentationsstruktur; und
- Synchronisieren von Datengliederungsstruktur und programminterner Datenrepräsentationsstruktur bezüglich ihrer jeweiligen Gliederungselemente und deren Relation zueinander.

16. Verfahren nach Anspruch 15, **dadurch gekennzeichnet, daß** das Synchronisieren ein Angleichen der programminternen Datenrepräsentationsstruktur an die Datengliederungsstruktur ist.

17. Verfahren nach Anspruch 15, **dadurch gekennzeichnet, daß** das Synchronisieren ein Angleichen der Datengliederungsstruktur an die programminterne Datenrepräsentationsstruktur ist.

18. Verfahren nach einem der Ansprüche 15 bis 17, **dadurch gekennzeichnet, daß** vor einem ersten Auslesen der Datengliederungsstruktur folgender Schritt durch eines der Anwendungsprogramme oder ein spezielles Anwendungsprogramm durchgeführt wird:
- Anlegen der benutzerdefinierbaren Datengliederungsstruktur.
